# EUROPÄISCHE PATENTANMELDUNG

(11) **EP 2 650 701 A2**
(43) Veröffentlichungstag der Anmeldung: **16.10.2013**
(21) Anmeldenummer: 13163399.2
(22) Anmeldetag: 11.04.2013
(51) Int. Cl.: G01W 1/00

(54) **System und Verfahren zur Messung und Speicherung meteorologischer Daten**

(30) Priorität: 11.04.2012 DE 102012103108
(71) Anmelder: Cube Engineering GmbH, 34119 Kassel (DE)
(72) Erfinder: Chun, Stefan, 34119 Kassel (DE)
(74) Vertreter: Kleine, Hubertus

(57) **Zusammenfassung**

Die Erfindung betrifft ein System zur Erfassung und Speicherung meteorologischer Daten mit
a) wenigstens einem Sensor (1) zum Erfassen wenigstens einer meteorologischer Größe,
b) wenigstens einer Erfassungseinheit (2), die dem wenigstens einem Sensor (1) zugeordnet ist, mit diesem über eine verkabelte Signalleitung (3) verbunden ist und mit einem Datenspeicher (4) zur Speicherung von dem Sensor (1) gelieferten Daten der meteorologischen Größe und einer Funkeinheit (5) zum kabellosen Versenden der gespeicherten Daten versehen ist,
c) einer Datenempfangseinheit (6), die mit der wenigstens einem dem Sensor (1) zugeordneten Erfassungseinheit (2) über eine drahtlos Kommunikationsleitung (7) verbunden ist.

## Beschreibung

Die Erfindung betrifft ein System und ein Verfahren zur Messung und Speicherung meteorologischer Daten.

Solche Systeme und Verfahren werden zur langfristigen und professionellen Messungen und Datenspeicherung von meteorologischen Größen, wie beispielsweise Windgeschwindigkeit, Windrichtung, Temperatur, Druck, relative Luftfeuchtigkeit, solare Einstrahlung oder dergleichen genutzt.

Insbesondere bei der Errichtung von neuen wirtschaftlich rentablen Wind- oder Solarparks werden möglichst akkurate meteorologische Daten benötigt, um damit eine Energieertragsprognose zu erstellen. Hierfür werden beispielsweise im Falle eines Windparks über einen Zeitraum von mindestens einem Jahr am geplanten Standort an einem Windmessmast mittels Sensoren Windgeschwindigkeit, Windrichtung, Temperatur, Druck und dergleichen meteorologische Größen gemessen. Bei der Vermessung eines größeren, komplexeren Geländes sollten mehrere Windmessmasten, im Bereich des geplanten Windparks aufgestellt werden. Auch nach Inbetriebnahme eines Windparks erfolgen Windmessungen, um den Windpark optimal zu steuern und die Wirtschaftlichkeit der Windturbinen zu überprüfen. Bei meteorologischen Windmessungen werden besonders hohe Ansprüche an die Genauigkeit und Zuverlässigkeit der Messeinrichtungen gestellt. Für eine exakte Windmessung, beispielsweise zur Ermittlung des wirtschaftlichsten Standortes, ist die sorgfältige Auswahl und Positionierung eines qualitativ hochwertigen Messsystems und dessen korrekter Aufbau ausschlaggebend. Schon minimale Messfehler von nur 3% bei der Bestimmung der Windgeschwindigkeit können zu hohen wirtschaftlichen Verlusten führen. Die Verfahren für die Vermessung sind reguliert und werden aktuell in den Technischen Richtlinien 6 der Fördergesellschaft Windenergie und andere Erneuerbare Energien e.V. (www.wind-fgw.de/pdf/TR6_Rev8-d_preview.pdf) und in der Norm IEC 61400-12-1 definiert.

Die meteorologische Messung wird aktuell mit Windmessmasten durchgeführt. Hierbei werden planungsspezifisch in verschiedenen Höhen, verschiedene Indikatoren gemessen. Eine typische Messanordnung beinhaltet ca. 3 Windgeschwindigkeitsmesssensoren auf verschiedenen Höhen, wie Schalensternanemometer, Windfahnen, sowie Luftdruck- und Temperatursensoren.

Die Messsysteme sind mit Datenspeichern, den sogenannten Datenlogger verkabelt. Über die Verkabelung transferieren die Sensoren die Messimpulse in den Datenlogger. Die Art der Messimpulse hängt von dem Sensor ab. Viele Schalensternanemometer übermittelt die gemessene Windgeschwindigkeit über die Frequenz eines Rechtecksignals. Im Gegensatz dazu wird bei einigen Windfahnen die Windrichtung mittels der Spannungsänderung an einem Potentiometer ermittelt. Andere Sensoren erzeugen andere Datenimpulse wie, Sinuskurven, Spannungswerte 0-5 Volt bzw. 0-1 Volt oder digitale Werte. Der Datenlogger wandelte nach einer vorab definierten Programmierung die Messimpulse in Messdaten wie Windgeschwindigkeit, Windrichtung, Temperatur, Druck etc. um. Diese werden in folgendem Format gespeichert: Min.-Wert, Max.-Wert, Standardabweichung, Mittelwert. Diese Messdaten werden im Datenlogger gespeichert.

Zudem verfügt der Datenlogger üblicherweise über ein GSM-Kommunikationssystem. Die Daten können so mit einem GSM Modem per Funk abgerufen oder per E-Mail verschickt und in eine Auslesungssoftware importiert werden. Die Daten werden dabei z.T. unverschlüsselt übertragen. Die Energieversorgung des Datenlogger, der Sensoren und einer optionalen Flugsicherungsbeleuchtung erfolgt über einen Akkumulator der normalerweise über ein Fotovoltaik- Modul geladen wird.

Durch die zunehmende Höhe der modernen Windkraftanlagen müssen die Messungen auch in größeren Höhen vorgenommen werden. Windmasten können somit eine Höhe von bis zu 200 Metern erreichen. Hieraus ergeben sich folgende Probleme:
a) Die Datenlogger werden üblicherweise am Mastfuß angebracht. Bei höheren Masten entstehen erhöhte Kosten durch die lange Verkabelung an den Masten von den Sensoren zum Datenlogger.
b) Der Zeitaufwand erhöht sich bei der Verkabelung und Fixierung, die wegen des Eigengewichtes und zum Schutz des Kabels notwendig ist.
c) Durch den Eigenwiderstand der langen Kabel müssen einige Sensoren mit der Anschlussleitung kalibriert werden.

Zudem birgt die Verkabelung grundsätzlich folgende Probleme:
d) Gefahr der Kabelvertauschung am Datenlogger
e) Gefahr der Zerstörung / Unbrauchbarkeit der Verkabelung durch natürliche Einflüsse oder Vandalismus.
f) Die Messdaten aller Sensoren werden singulär nur in einem Datenlogger gespeichert. Beim Ausfall des Datenloggers sind auch alle Messdaten verloren.

Bei der Verwendung von weiteren Messsensoren, abseits des Messmastes oder an anderen Messmasten müssen aktuell weitere Datenlogger verwendet oder eine aufwändige Verkabelung vorgenommen werden.

Es ist daher Aufgabe der Erfindung, ein System und ein Verfahren zur Messung und Speicherung meteorologischer Daten zur Verfügung zu stellen, mit welchen die durch die Verkabelung der Sensoren mit den Datenloggern auftretenden Probleme vermieden und die Anfälligkeit gegen äußere Einflüsse und Vandalismus minimiert werden können.

Gelöst wird diese Aufgabe systemgemäß durch ein System mit allen Merkmalen des Patentanspruchs 1 und verfahrensgemäß durch ein Verfahren mit allen Merkmalen des Patentanspruchs 15. Vorteilhafte Ausgestaltungen der Erfindung finden sich in den Unteransprüchen 2 bis 14 und 16 bis 18.

Dadurch dass das System zur Erfassung und Speicherung meteorologischer Daten
a) wenigstens einen Sensor zum Erfassen wenigstens einer meteorologischer Größe,
b) wenigstens eine Erfassungseinheit, die dem wenigstens einem Sensor zugeordnet ist, mit diesem über eine verkabelte Signalleitung verbunden ist und mit einem Datenspeicher zur Speicherung von dem Sensor gelieferten Daten der meteorologischen Größe und einer Funkeinheit zum kabellosen Versenden der gespeicherten Daten versehen ist,
c) einer Datenempfangseinheit, die mit der wenigstens einen dem Sensor zugeordneten Erfassungseinheit über eine drahtlos Kommunikationsleitung verbunden ist,
   aufweist, kann beispielsweise an einem Windmast auf eine aufwendige und lange Verkabelung der einzelnen mit einem Datenlogger, der der erfindungsgemäßen Datenempfangseinheit entspricht verzichtet werden. Allein durch den, aufgrund der nicht benötigten Kabel, entfallenden Materialaufwand ergibt sich eine einfachere Handhabung, da keine Kabel bis zu 200 Meter am Windmast entlang zur Datenempfangseinheit geführt werden müssen, so dass auch die Sicherung des Eigengewichts des Kabels durch beispielsweise eine Zugentlastung in Nähe des Sensors nicht mehr notwendig ist. Lediglich eine minimale Verkabelung von Sensor mit Erfassungseinheit ist noch notwendig, doch fällt diese belastungstechnisch nicht ins Gewicht, da Sensor und Erfassungseinheit räumlich sehr nah aneinander im Bereich des jeweiligen Sensors angeordnet sind. Auch kann die Datenempfangseinheit, die dem ursprünglichen Datenlogger entspricht nunmehr gesichert angeordnet werden, so dass sie sowohl vor äußeren Einflüssen als auch vor Vandalismus geschützt ist. Zudem muss nicht an jedem Windmast eine separate Datenempfangseinheit angeordnet werden. Vielmehr können die Daten einer Vielzahl von Windmasten nunmehr zentral über eine einzige Datenempfangsanlage gesammelt und weiterverarbeitet werden. Durch den Verzicht auf die Verkabelung kann auch die Fehlerquelle einer falschen Verkabelung und damit eine möglicherweise aufwendige Fehlersuche aufgrund falscher Verkabelung ausgeschlossen werden.

Nach einer ersten vorteilhaften Ausgestaltung der Erfindung ist die Erfassungseinheit zum Anschluss mehrerer, vorzugsweise zwei Sensoren ausgebildet. Durch diese Maßnahme können über eine Erfassungseinheit Daten mehrere Sensoren gesammelt und gespeichert werden und an die Datenempfangseinheit gesendet werden, so dass nicht für jeden Sensor eine separate Erfassungseinheit notwendig ist.

Nach einem weiteren Gedanken der Erfindung weist die Erfassungseinheit eine interne Temperaturerfassung auf, deren Werte ebenfalls im Datenspeicher speicherbar sind. Durch eine solche Temperaturerfassung können Temperaturprofile erstellt werden.

Vorzugsweise ist der wenigstens eine Sensor zur Erfassung einer der meteorologischen Größen Windgeschwindigkeit, Windrichtung, Temperatur, Luftdruck, relative Luftfeuchtigkeit, solare Einstrahlung oder dergleichen ausgebildet. Durch die Berücksichtigung möglichst vieler meteorologischer Größen auch an unterschiedlichen Orten, beispielsweise in unterschiedlicher Höhe eines Windmessmastes, lassen sich besonders genaue Prognosen erstellen. Denn je dichter das Sensornetz für eine meteorologische Größe ist, desto genauer kann mit Hilfe der verwendeten Modelle und Theorien, die Prognose erstellt werden.

Nach einem besonders vorteilhaften Gedanken der Erfindung ist die Kommunikationsleitung zur bidirektionalen Kommunikation ausgebildet. So ist es möglich, dass nicht nur Daten von der Erfassungseinheit zur Datenempfangseinheit übermittelt werden können, vielmehr ist auch eine Kommunikation in umgekehrter Richtung von der Datenempfangseinheit zur Erfassungseinheit möglich. So kann beispielsweise auch die Funktionsfähigkeit von Erfassungseinheit und Sensoren per Fernwartung überprüft werden, ohne dass eine Wartungstechniker die Sensoren und die Erfassungseinheit vor Ort aufsuchen muss. Vorteilhafterweise ist die Erfassungseinheit zur Verschlüsselung der zu speichernden Daten beziehungsweise der gespeicherten Daten ausgebildet. Durch dies Maßnahme liegen die gemessenen Daten zur Weiterverarbeitung in verschlüsselter Form vor, so dass Unberechtigte mit den verschlüsselten Daten ohne den entsprechenden Decodieralgorithmus nichts anfangen können. Somit könnte auf eine spätere verschlüsselte Übertragung zur Weiterverarbeitung der Daten auf einem fernen Prozessor verzichtete werden.

Um die Sicherheit der Daten allerdings nochmals zu erhöhen ist die Funkeinheit der Erfassungseinheit zum verschlüsselten Versenden von Daten ausgebildet.

Ferner weist der Datenspeicher der Erfassungseinheit wenigstens einen Ringspeicher, vorzugsweise zwei redundante Ringspeichern auf, die vorzugsweise als Flashspeicher ausgebildet sind. Solche Speicher sind kostengünstig und für die Anforderungen ausreichend widerstandsfähig. Die Redundanz der Ringspeicher ermöglicht es, dass bei Ausfall eines Speichers nicht alle gespeicherten Werte verloren sind. Vielmehr wird die Funkeinheit der Erfassungseinheit der Datenempfangseinheit den entsprechenden Ausfall eines Ringspeichers melden, so dass ein Wartungstechniker instruiert werden kann, den fehlerhaften Ringspeicher auszutauschen.

Besonders vorteilhaft ist es, wie bereits weiter oben erwähnt, wenn die Datenempfangseinheit zur kabellosen Kommunikation mit einer Mehrzahl von Erfassungseinheiten ausgebildet ist.

Auch bei der Datenempfangseinheit hat es sich bewährt, zur Speicherung der von den Erfassungseinheiten gelieferten Daten einen Datenspeicher vorzusehen, der vorzugsweise mit zwei redundanten Datenspeichern ausgestattet ist, die vorzugsweise als Compact-Flash-Karte, USB-Stick oder dergleichen ausgebildet sind. Auch hierdurch ist ein weiteres Mal die Wahrscheinlichkeit eines Datenverlustes minimiert.

Nach einem besonders vorteilhaften Gedanken der Erfindung weist die Datenempfangseinheit eine Prozessoreinheit auf, welche
a) zum Abruf der Daten von den Erfassungseinheiten und/oder
b) zur Aufbereitung einer Daten E-Mail zur kabellosen Versendung an einen E-Mail-Server und/oder zum Aktualisieren der Uhrzeit mittels Onlineverbindung mit einem Timeserver ausgebildet ist. Durch diese Maßnahme ist es dem erfindungsgemäßen System möglich mit fernen Prozessoren zu kommunizieren und mithilfe der vom Timeserver erhaltenen Uhrzeit die einzelnen Erfassungseinheiten und Sensoren zeitlich miteinander zu synchronisieren.

Hinsichtlich der Energieversorgung des Systems hat es sich als vorteilhaft erwiesen, dass die Erfassungseinheit und die Datenempfangseinheit jeweils eine autarke Energieversorgung, insbesondere in Form eines Fotovoltaikmoduls mit integriertem Akkumulator aufweist. Insofern ist man zur Energieversorgung des Systems unabhängig von einem öffentlichen Energienetz, so dass zu jederzeit, auch bei einem Energieausfall im Umgebungsnetz die Messwerterfassung ununterbrochen fortgesetzt werden kann.

Als vorteilhaft hat sich zudem herausgestellt, dass die Datenempfangseinheit beziehungsweise deren Prozessoreinheit eine GSM-Modem zum Versand, vorzugsweise zum verschlüsselten Versand der Daten via E-Mail aufweist. Dadurch ist in einfacher Weise eine Kommunikation eines fernen Prozessors mit der Datenempfangseinheit möglich. Idealerweise ist die Datenempfangseinheit in ein Netzwerk eingebunden, so dass ihr beispielsweise eine eigene IP-Adresse zugewiesen ist, mit welcher ein entfernter Rechner kommunizieren kann.

Nach einer weiteren Ausgestaltung der Erfindung ist es vorgesehen,dass das erfindungsgemäße System eine Visualisierungseinheit aufweist, welche a) die von der Datenempfangseinheit übermittelten Daten decodiert und die decodierten Daten in visualisierbare physikalische Messwerte wie beispielsweise Windgeschwindigkeit, Windrichtung und dergleichen aufbereitet und/oder
b) einen Datencheck durchführt und/oder
c) einen Systemcheck durchführt und/oder
d) eine Exportdatei zum Versenden mittels E-Mail erstellt.

Die Anwendung des erfindungsgemäßen Systems kann sowohl in geplanten oder bestehenden Windparks als auch in geplanten wie bestehenden Fotovoltaik Parks erfolgen.

Photovoltaik-Parks erreichen mittlerweile eine Größe von mehreren Hektar. Zur Ertragsoptimierung sollten Einstrahlungssensoren im gesamten Solarpark verteilt installiert werden um Abweichungen zwischen der möglichen und der tatsächlichen Stromproduktion ermitteln zu können. Diese Sensoren müssten über große Distanzen verkabelt und die Leitungen gegen Tierverbiss geschützt werden. Bei dem erfindungsgemäßen System entfallen die durch Material und Arbeitszeit anfallenden Kosten für die geschützte Verkabelung. Das System kann jederzeit problemlos erweitert oder durch zusätzliche Sensoren (Niederschlag, Umgebungstemperatur, Modultemperatur, Windgeschwindigkeit), die für den elektrischen Ertrag eines Solarparks mitverantwortlich sind, ergänzt werden.

Zur Leistungserfassung und -optimierung eines Windparks können die einzelnen Windenergieanlagen mit separate Anemometer (unabhängig vom Gondelanemometer) sowie Wirkleistungsmessumformern als Sensoren versehen werden. Zusätzlich können ein oder mehrere Windmessmasten inkl. Sensorik im Park verteilt errichtet werden. Die Messdatenerfassung aller Sensoren geschieht mit den diversen Erfassungseinheiten und einer zentralen Datenempfangseinheit des erfindungsgemäßen Systems. Es entstehen keine Kosten für Verkabelung und es wird nicht in die Anlagensteuerung der Windenergieanlage eingegriffen. Außerdem werden elektrische Rückwirkungen der eingesetzten Sensoren auf die Windenergieanlage ausgeschlossen

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigt:

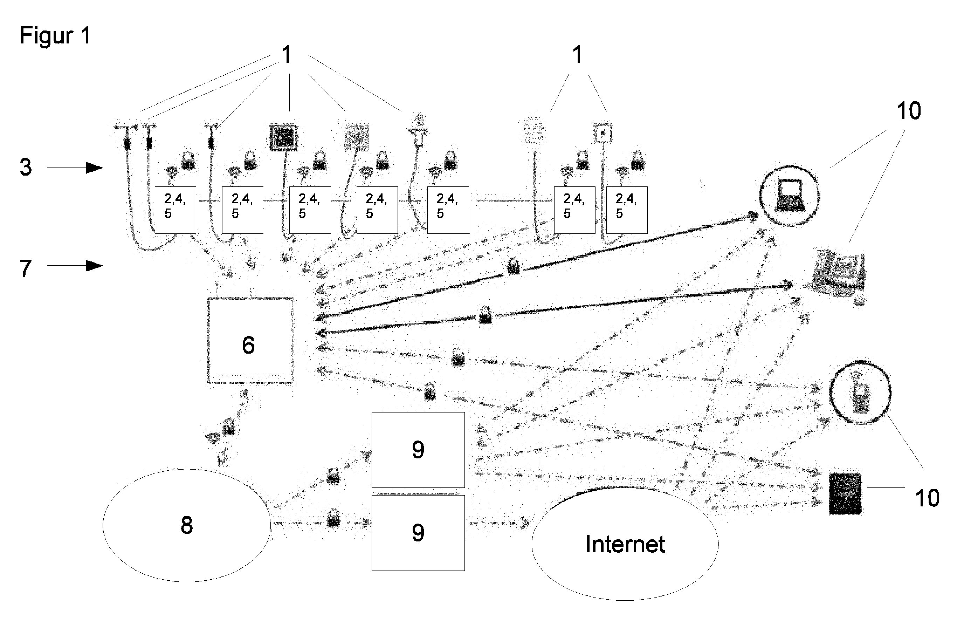

- Figur 1:: ein Ausführungsbeispiel eines erfindungsgemäßen System anhand eines Windmessmastes.

Im Gegensatz zu dem gängigen System der Verkabelung der Sensoren mit der als Datenlogger ausgebildeten Datenempfangseinheit ist das vorliegende Ausführungsbeispiel der Erfindung im Wesentlichen wie nachfolgend beschrieben ausgeführt.

Einer dezentralen Erfassungseinheit 2, die in diesem Ausführungsbeispiel drei Messwerte verarbeiten kann, nämlich:
a) zwei Messwerte durch Anschluss zweier externer Sensoren 1,
b) die interne Temperatur durch einen internen hier nicht dargestellten Temperaturerfassungssensor.

Die Erfassung der Messwerte der Sensoren 1 und des Temperaturerfassungssensors erfolgt sekündlich, während die Datenverarbeitung in 10 Minuten-Intervallen durchgeführt wird, wobei jeweils die folgenden Daten für die Messwerte innerhalb des 10 Minuten-Intervalls erfasst werden: ein Minimal-Wert, ein Maximal-Wert, eine Standardabweichung und ein Mittelwert.

Die Zwischenspeicherung aller Messwerte erfolgt für 56 Tage in zwei Datenspeichern 4, die als Ringspeicher konfiguriert und mit zwei redundanten Flashspeichern ausgestattet sind.

Ferner ist eine Funkeinheit 5 zur verschlüsselten, nicht zu manipulierenden Übertragung der Messwerte an eine Datenempfangseinheit 6 vorgesehen. Die Funkeinheit 5 ist je nach Anforderung mit unterschiedlicher Leistung ausgestattet. Beispielsweise kann die Funkreichweite wie nachfolgend dargestellt ausgeführt sein:
a) mit einem Low Power Modul, Interne Antenne: 150 Meter
b) mit einem Low Power Modul, Externe Antenne: 500 Meter
c) mit einem High Power Modul, Externe Antenne: 4.000 Meter

Zudem weist das Ausführungsbeispiel eine nicht dargestellte Solarzelle und einen Energiespeicher zur autarken Energieversorgung auf.

Der reine Akkubetrieb ist für bis zu sechs Tagen ausgelegt, so dass auch ein defektes Solarmodul innerhalb dieser Zeit ausgetauscht werden kann, ohne dass der Normalbetrieb unterbrochen werden muss.

Zwischen den Sensoren 1 und der Erfassungseinheit 2 ist eine zwei bis drei Meter lange Kabelverbindung als Signalleitung 3 angeordnet.

Zudem weist das System eine Datenempfangseinheit 6 mit folgenden Funktionalitäten auf:

Eine Empfangseinheit für gegebenenfalls verschlüsselten von der Funkeinheit 5 der Erfassungseinheit 2 übertragenen Daten. In diesem Ausführungsbeispiel sind 255 Erfassungseinheiten 2 mit der Datenempfangseinheit 6 über eine kabellose Kommunikationsleitung 7 verbunden. Die Zwischenspeicherung der Messwerte aller Erfassungseinheiten 2 erfolgt auch in der Datenempfangseinheit 6 in einem Datenspeicher, der gegebenenfalls auch aus zwei redundanten Flashspeichern besteht.

Ferner wird durch die Datenempfangseinheit 6 die aktuelle Uhrzeit für die Erfassungseinheiten 2 bereitgestellt. Dadurch ist eine Zeitsynchronisation aller Erfassungseinheiten möglich, so dass die Datenempfangseinheit 6 sozusagen als Zeitgeber für die Erfassungseinheiten 2 dient. Die Messwerterfassung durch die Erfassungseinheiten 2 kann somit immer gleichzeitig erfolgen.

In die Datenempfangseinheit 6 ist eine Prozessoreinheit, vorliegend ein ALIX-Board, integriert, welches unter anderem dazu dient, die Daten von den Erfassungseinheiten 2 abzurufen und die Uhrzeit mittels Onlineverbindung mit einem Time-Server zu synchronisieren. In der Datenempfangseinheit 6 ist eine Langzeitspeicherung (jeweils ca. 10 Jahre) aller Daten in den beiden redundanten Speichern, die auch als Compact-Flash-Card oder USB-Stick ausgebildet sein können möglich.

Die von den Erfassungseinheiten 2 übertragenen Daten werden innerhalb der Datenempfangseinheit 6 aufbereitet, so dass sie beispielsweise als E-Mail mittels eines GSM- Modem vorzugsweise verschlüsselt an einen E-Mail-Server versandt werden können.

Dabei wird bei jeder Internetverbindung die Systemzeit der Datenempfangseinheit 6 mit einem Time-Server synchronisiert und somit aktualisiert. Die Datenempfangseinheit 6 überträgt dann die aktualisierte Zeit per Funk an die Erfassungseinheiten 2.

Auch für die Datenempfangseinheit 6 erfolgt die Energieversorgung vorzugsweise autark über eine Solarzelle und Energiespeicher.

Die von der Datenempfangseinheit 6 vorzugsweise mittels des GSM-Modems über Funk kabellos übermittelten Daten werden mit einer in einer Visualisierungseinheit 9 betriebenen Visualisierungssoftware decodiert. Die Visualisierungssoftware weist folgenden Funktionalitäten auf:
- Decodierung der von der Datenempfangseinheit 6 übertragenen Daten,
- Aufbereitung der Messwerte in physikalischen Größen wie Windgeschwindigkeit, Windrichtung etc., was vom jeweiligen Sensor 1, der die Daten ursprünglich an die jeweilige Erfassungseinheit 2 geliefert hat, abhängig ist,
- Datencheck: Entsprechen die Daten der erwarteten Form,
- Systemcheck: Funktionieren alle Komponenten und Sensoren des Systems zuverlässig,
- Erstellen einer Exportdatei (.txt; .csv usw.) für andere Anwendungen z.B. Excel.

In der Regel erfolgt in der Visualisierungseinheit 9 noch keine Analyse oder Interpretation der Daten. Diese erfolgt in der Regel erst in weiteren Endgeräten 10.

Wie bereits erwähnt weisen die Erfassungseinheiten 2 des vorliegenden Ausführungsbeispiels zwei externe Eingangskanäle für Sensoren 1 auf. Die Messimpulse, welche die Erfassungseinheiten 2 verarbeiten können, hängen von der Ausführung bzw. der internen Einstellung über Jumper oder dergleichen ab. Folgende elektrische Ausgangsgrößen können verarbeitete werden:
- Frequenzen (Rechteck oder Sinusimpulse)
- Potentiometrische Windfahnen
- Digitale Windfahnen (Gray-Code)
- 0... 1 Volt
- 0 ... 5 Volt
- 0...100mVolt
- 0 ... 20mA
- 4 ... 20mA

Die einzelnen Messwerte eines Kanals werden in 10 Minuten Intervalle zu folgenden Werten zusammengefasst: Minimalwert, Maximalwert, Standardabweichung, Mittelwert. Die Messimpulse der Windrichtung werden in der Erfassungseinheit 2 vor der Berechnung der Werte der 10 Minuten Intervalle vektoriell in Grad umgerechnet. Die interne Temperaturmessung erfolgt in Grad Celsius. In den beiden redundanten Ringspeichern des Datenspeichers 4 werden die Messwerte bis zu 56 Tage gespeichert. Parallel dazu übertragen die Erfassungseinheiten 2 kontinuierlich per Funk die Messdaten verschlüsselt an die Datenempfangseinheit 6. Dabei kann die Datenempfangseinheit 6 vorliegend bis zu 255 Erfassungseinheiten 2 verwalten. Die Erfassungseinheiten 2 melden sich automatisch an der Datenempfangseinheit 6 an, wenn sie zuvor mit dessen Netzwerkgruppen-ID und Netzwerkschlüssel konfiguriert wurden. Die Datenempfangseinheit 6 speichert dann die Daten aller angeschlossenen Erfassungseinheiten 2 in zwei redundanten Speichern jeweils bis zu ca. 10 Jahre. Die codierten Daten können dann wie folgt aus der Datenempfangseinheit 6 ausgelesen werden:
- Abruf der Daten direkt per Laptop und Netzwerkkabel,
- Die Datenempfangseinheit 6 sendet automatisiert via GSM-Modem eine E-Mail mit den Daten,
- Optional kann ein Auslesung der Daten über WLAN direkt an der Datenempfangseinheit 6 erfolgen.

Weitere Funktionalitäten des Systems sind:
Die Datenempfangseinheit 6 und die Erfassungseinheiten 2 verfügen jeweils über eigene autarke Stromversorgungen. Diese
basieren auf Photovoltaikmodulen und Akkumulatoren sowie einer Lade- und Steuereinheit.

Des Weiteren verfügen die Erfassungseinheiten 2 über eine interne Temperaturerfassung. Diese dient zum einem als Statussignal der Einheit und zum anderen können die einzelnen Werte auf den verschiedenen Höhen zur Ermittlung eines Temperaturprofils genutzt werden. Die Temperaturdaten werden bei der Datenübertragung jeweils mit übermittelt.

Folgende Vorteile ergeben sich aus dem erfindungsgemäßen System:
- Dezentrale, redundante Datenerfassung:
   Die Messimpulse werden nicht nur in einer Einheit/Logger erfasst und gespeichert, sondern bis zu 56 Tage in den Erfassungseinheiten 2 und bis zu 10 Jahren in der Datenempfangseinheit 6. Dabei verfügen sowohl die Erfassungseinheiten 2 als auch die Datenempfangseinheit 6 über redundante Speichersysteme. Sollte eine Erfassungseinheit 2 des Systems ausfallen,
   so werden alle übrigen Messwerte noch erfasst, gespeichert und übertragen. Im Gegensatz dazu gehen bei den z.Z. üblichen Datenloggern alle Messwerte, bei Ausfallen des Loggers, verloren.
- Kabellose Datenübertragung:
   Die Anbindung der Sensoren 1 mittels Erfassungseinheiten 2 an die Datenempfangseinheit 6 erfolgt über Funk. Somit entfallen die Kosten für die Kabel und den Zeitaufwand für deren Verlegung. Zudem besteht kein Risiko der Falschverkabelung
   (Messhöhen vertauschen) der Sensoren 1 mit der Datenempfangseinheit 6.
   Weiter ergibt sich die Möglichkeit die Datenempfangseinheit 6 dezentral, also ohne physische Verbindung zu den Sensoren, zu positionieren (z.B. in der Nähe stehende Gebäude). So kann ein höherer Schutz vor Vandalismus oder schädlichen Umwelteinflüssen gewährleistet werden. Des weiteren können, z.B. in einem Windpark, die Erfassungseinheiten 2 von verschiedenen Windmessmasten in einer Datenempfangseinheit 6 zusammengefasst werden.
- Einfache Anpassung des System an Eingangssignale der Sensoren 1:
   Neue Sensoren 1 mit anderen Messimpulsen können einfach über die Erfassungseinheit 2 an die Datenempfangseinheit 6 angebunden werden.
   Hierfür müssen nur die kostengünstigen Erfassungseinheiten 2 auf die neuen Messimpulse abgestimmt werden.
- Verschlüsselte Datenübertragung:
   Alle Messwerte werden bis hin zum Endnutzer verschlüsselt gespeichert und übertragen. Somit besteht keine Möglichkeit der Datenmanipulation oder der Datennutzung per Datendiebstahl.

### Bezugszeichenliste

| | |
|---|---|
| 1 | Sensor |
| 2 | Erfassungseinheit |
| 3 | Signalleitung |
| 4 | Datenspeicher |
| 5 | Funkeinheit |
| 6 | Datenempfangseinheit |
| 7 | Kommunikationsleitung |
| 8 | E-Mail-Server |
| 9 | Visualisierungseinheit |
| 10 | Endgerät |

## Patentansprüche

1. System zur Erfassung und Speicherung meteorologischer Daten mit
a) wenigstens einem Sensor (1) zum Erfassen wenigstens einer meteorologischer Größe,
b) wenigstens einer Erfassungseinheit (2), die dem wenigstens einem Sensor (1) zugeordnet ist, mit diesem über eine verkabelte Signalleitung (3) verbunden ist und mit einem Datenspeicher (4) zur Speicherung von dem Sensor (1) gelieferten Daten der meteorologischen Grö-βe und einer Funkeinheit (5) zum kabellosen Versenden der gespeicherten Daten versehen ist,
c) einem Datenempfangseinheit (6), die mit der wenigstens einem dem Sensor (1) zugeordneten Erfassungseinheit (2) über eine drahtlos Kommunikationsleitung (7) verbunden ist.

2. System nach Anspruch 1, **dadurch gekennzeichnet, dass** die Erfassungseinheit (2) zum Anschluss mehrerer, vorzugsweise zwei Sensoren (1) ausgebildet ist.

3. System nach Anspruch 1 oder 2, **dadurch gekennzeichnet, dass** die Erfassungseinheit (2) eine interne Temperaturerfassung aufweist, deren Werte ebenfalls im Datenspeicher (4) speicherbar sind.

4. System nach einem der vorhergehenden Ansprüche, **dadurch gekennzeichnet, dass** der wenigstens eine Sensor (1) zur Erfassung einer der meteorologischen Größen Windgeschwindigkeit, Windrichtung, Temperatur, Luftdruck, relative Luftfeuchtigkeit, solare Einstrahlung oder dergleichen ausgebildet ist.

5. System nach einem der vorhergehenden Ansprüche, **dadurch gekennzeichnet, dass** die Kommunikationsleitung (7) und die Funkeinheit (5) zur bidirektionalen Kommunikation ausgebildet sind.

6. System nach einem der vorhergehenden Ansprüche, **dadurch gekennzeichnet, dass** die Erfassungseinheit (2) zum Verschlüsselung der zu speichernden Daten beziehungsweise der gespeicherten Daten ausgebildet ist.

7. System nach einem der vorhergehenden Ansprüche, **dadurch gekennzeichnet, dass** die Funkeinheit (5) zum verschlüsselten Versenden von Daten ausgebildet ist.

8. System nach einem der vorhergehenden Ansprüche, **dadurch gekennzeichnet, dass** der Datenspeicher (4) vorzugsweise mit zwei redundanten als Ringspeichern ausgebildeten Flashspeicher ausgestattet ist.

9. System nach einem der vorhergehenden Ansprüche, **dadurch gekennzeichnet, dass** die Datenempfangseinheit (6) zur kabellosen Kommunikation mit einer Mehrzahl von Erfassungseinheiten (2) ausgebildet ist.

10. System nach einem der vorhergehenden Ansprüche, **dadurch gekennzeichnet, dass** die Datenempfangseinheit (6) zur Speicherung der von den Erfassungseinheiten (2) gelieferten Daten mit einem Datenspeicher versehen ist, der vorzugsweise mit zwei redundanten Datenspeichern ausgestattet ist, die vorzugsweise als Compact-Flash-Karte, USB-Stick oder dergleichen ausgebildet sind.

11. System nach einem der vorhergehenden Ansprüche, **dadurch gekennzeichnet, dass** die Datenempfangseinheit (6) eine Prozessoreinheit aufweist, welche
a) zum Abruf der Daten von den Erfassungseinheiten (2) und/oder
b) zur Aufbereitung einer Daten E-Mail zur Kabellosen Versendung an einen E-Mail-Server (8) und/oder zum Aktualisieren der Uhrzeit mittels Onlineverbindung mit einem Timeserver
ausgebildet ist.

12. System nach einem der vorhergehenden Ansprüche, **dadurch gekennzeichnet, dass** die Erfassungseinheit (2) und die Datenempfangseinheit (6) jeweils eine autarke Energieversorgung, insbesondere in Form einer Solarzelle beziehungsweise Photovoltaikanlage mit integriertem Akkumulator aufweist.

13. System nach einem der vorhergehenden Ansprüche, **dadurch gekennzeichnet, dass** die Datenempfangseinheit (6) eine GSM-Modem zum Versand, vorzugsweise zum verschlüsselten Versand der Daten via E-Mail aufweist.

14. System nach einem der vorhergehenden Ansprüche, **dadurch gekennzeichnet, dass** es eine Visualisierungseinheit (9) aufweist, welche
a) die von der Datenempfangseinheit (6) übermittelten Daten decodiert und die decodierten Daten in visualisierbare physikalische Messwerte wie beispielsweise Windgeschwindigkeit, Windrichtung und dergleichen aufbereitet und/oder
b) einen Datencheck durchführt und/oder
c) einen Systemcheck durchführt und/oder
d) eine Exportdatei erstellt

15. Verfahren zur Erfassung und Speicherung meteorologischer Daten, insbesondere mit einem System nach einem der Ansprüche 1 bis 14, enthaltend folgende Verfahrensschritte:
I) Erfassen wenigstens einer meteorologischer Größe,
II) Speicherung der erfassten meteorologischen Größe
III) kabelloses, vorzugsweise verschlüsseltes Versenden der gespeicherten Daten an eine vor unbefugten Zugriff, Vandalismus und äußeren natürlichen Einflüssen geschützten Datenempfangseinheit (6).
